# EUROPEAN PATENT APPLICATION

(11) **EP 4 523 858 A1**
(43) Date of publication of application: **19.03.2025**
(21) Application number: 22944985.5
(22) Date of filing: 03.06.2022
(51) Int. Cl.: B25J 5/00, B25J 11/00, B65G 41/00

(54) **TRANSPORT ROBOT**

(71) Applicant: LG Electronics Inc., Yeongdeungpo-gu Seoul 07336 (KR)
(72) Inventor: LEE, Haklim, Seoul 06772 (KR); HAN, Jongbeom, Seoul 06772 (KR); CHEON, Jeeyoung, Seoul 06772 (KR)
(74) Representative: Schornack, Oliver
(86) International application number: PCT/KR2022/007902
(87) International publication number: WO 2023/234447

(57) **Abstract**

A transport robot includes: a body including a loading area and an unloading exit at one side of the loading area; a driving part which is positioned at a lower part of the body and provides a driving function; a conveyor which is positioned below the loading area and transfers a product loaded in the loading area to the unloading exit; a moving plate which is withdrawn in a first direction from the body below the unloading exit and forms a first inclination surface extending from the unloading exit to the ground; and a slide drive part for providing power to move the moving plate. The transport robot can automatically unload a loaded product and thus can complete transport even in an unmanned environment.

## Description

### [Technical Field]

Embodiments of the present disclosure relate to a robot for transporting one or more articles to a destination and a method for operating the same.

### [Background Art]

To take charge of a portion of factory automation, robots have been developed for industrial use. Recently, the application range of robots has been further expanded, and robots that can be used in daily life as well as medical robots and aerospace robots are being developed.

Among industrial robots, robots that perform precise assembly work repeatedly perform the same operations and repeat the operations without encountering unexpected situations at a predetermined position, so that automation using the robots has been proceeded.

However, a transportation area including a traveling area (i.e., a driving area) where occurrence or non-occurrence of unexpected situations can be determined, has not yet been actively commercialized with robots. However, recently, as performance of sensors that recognize the surroundings has improved and computer technology that can quickly process the recognized information has evolved, the number of driving robots has rapidly increased.

Industrially, robots that are in charge of transportation functions have attracted attention and competition in robot technology is intensifying day by day. In addition to robots that transport bulky or large articles, there is a growing need for robots that perform services to transport small articles to destinations.

However, conventional goods transportation has difficulty in unloading loaded articles from a loading space to a destination. Since costs are increased when using an arm-shaped device like a person's arm, research on cheaper and more stable unloading methods capable of unloading articles is being actively conducted.

### [Disclosure]

### [Technical Problem]

An object of the present disclosure is to provide a transport robot capable of safely unloading loaded articles.

### [Technical Solutions]

In accordance with an aspect of the present disclosure, a transport robot may include: a body configured to include a loading area and an unloading exit located at one side of the loading area; a driving unit located at a lower part of the body and providing a driving function; a conveyor located at a lower part of the loading area and transporting articles loaded in the loading area to the unloading exit; a moving plate that is pulled out from the body in a first direction at a lower part of the unloading exit and forms a first inclined surface extending from the unloading exit to the floor; and a slide driving unit configured to provide power for moving the moving plate.

The slide driving unit may include: a motor configured to provide rotational force; at least one ball screw configured to rotate by receiving the rotational force of the motor and extend in the first direction; and a moving block that moves in the first direction or a second direction opposite to the first direction when the ball screw rotates, and at the same time is coupled to the moving plate.

The ball screw may include two ball screws provided in pairs so that the two ball screws are spaced apart in a third direction perpendicular to the first direction.

The motor may include a rotary shaft that faces a third direction perpendicular to the first direction. The transport robot may further include: a bevel gear disposed between the motor and the ball screw and changing a rotation direction of the motor.

The transport robot may further include: a linear guide configured to penetrate the moving block and arranged parallel to the ball screw.

The slide driving unit may include: a bearing that is spaced apart from the motor in the first direction, supports a lower part of the moving plate, and rotates according to movement of the moving plate.

The moving plate may include: a first plate coupled to the slide driving unit; a second plate configured to protrude outward from the body and forming an inclined surface; and a damping hinge configured to interconnect the first plate and the second plate, wherein when the second plate is completely withdrawn to the outside of the body, the first plate and the second plate are bent at a predetermined angle.

The end portion arranged in a second direction opposite to the first direction of the second plate may include: a pair of fastening parts located on both sides of a third direction perpendicular to the first direction and fastened to the damping hinge; and a protrusion configured to extend in the second direction between the pair of fastening parts.

The transport robot may further include: a bent portion configured to be bent downward from a first-directional end of the moving plate.

The bent portion may include: a first bent portion that is bent 90 degrees at the end of the moving plate.

The bent portion may include a second bent portion that is bent twice from the first bent portion and contacts the floor surface when the moving plate is withdrawn.

The transport robot may further include: a stopper that is located at the first directional end of the body, and contacts the bent portion when the moving plate is seated in the body, thereby restricting a movement distance of the moving plate.

The transport robot may further include: a fixed inclined portion configured to form a second inclined surface where the conveyor and the moving plate are connected to each other.

The second inclined surface may have a greater angle than that of a first inclined surface formed when the moving plate is withdrawn from the body.

The transport robot may further include: an opening through which the moving plate is withdrawn, formed at a lower part of the fixed inclined portion, wherein the opening is formed to have a size of a bent portion that is bent downward from the first directional end of the moving plate.

An angle of the first inclined surface may be 40° or less.

### [Advantageous Effects]

As is apparent from the above description, the transport robot according to the present disclosure can automatically unload loaded articles, so that the transport robot can automatically complete not only transportation of articles but also unloading of articles by people.

The transport robot can safely unload loaded articles to prevent the articles from falling or being damaged by dropping.

In addition, since the length of a moving plate is short, it is easy to load the articles in the transport robot and the time taken to load and unload such articles can be shortened.

Effects obtainable from the present embodiments are not limited by the above mentioned effects, and other unmentioned effects can be clearly understood from the above description by those having ordinary skill in the technical field to which the present disclosure pertains.

### [Description of Drawings]

FIG. 1 is a diagram illustrating a cloud system based on a 5G network according to an embodiment of the present disclosure.
FIG. 2 is a block diagram illustrating appearance of a transport robot according to an embodiment of the present disclosure.
FIG. 3 is a perspective view illustrating a transport robot according to an embodiment of the present disclosure.
FIG. 4 and FIG. 5 are perspective views illustrating a state in which a cover of the transport robot of FIG. 3 is removed.
FIG. 6 is a cross-sectional view illustrating the transport robot taken along the line A-A of FIG. 5.
FIG. 7 is a perspective view illustrating a moving plate and a substructure of the transport robot according to an embodiment of the present disclosure.
FIG. 8 is a diagram illustrating the operation of the moving plate of the transport robot according to an embodiment of the present disclosure.
FIG. 9 is a diagram illustrating a state in which the moving plate of the transport robot is pulled out (withdrawn).
FIG. 10 is a diagram illustrating a design process for deriving an angle and length of the moving plate.
FIGS. 11A and 11B are views illustrating examples of a process of unloading an article through an unloading module of the transport robot according to an embodiment of the present disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element may be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A robot is a machine device capable of automatically performing a certain task or operation. The robot may be controlled by an external control device or may be embedded in the control device. The robot may perform tasks that are difficult for humans to perform, such as repeatedly processing only a preset operation, lifting a heavy object, performing precise tasks or a hard task in extreme environments.

In order to perform such tasks, the robot includes a driver such as an actuator or a motor, so that the robot may perform various physical operations, such as moving a robot joint.

Industrial robots or medical robots having a specialized appearance for specific tasks due to problems such as high manufacturing costs and dexterity of robot manipulation were the first to be developed.

Whereas industrial and medical robots are configured to repeatedly perform the same operation in a designated place, mobile robots have recently been developed and introduced to the market. Robots for use in the aerospace industry may perform exploration tasks or the like on distant planets that are difficult for humans to directly go to, and such robots have a driving function.

In order to perform the driving function, the robot has a driver, wheel(s), a frame, a brake, a caster, a motor, etc. In order for the robot to recognize the presence or absence of surrounding obstacles and move while avoiding the surrounding obstacles, an evolved robot equipped with artificial intelligence has recently been developed.

Artificial intelligence refers to a technical field for researching artificial intelligence or a methodology for implementing the artificial intelligence. Machine learning refers to a technical field for defining various problems handled in the artificial intelligence field and for researching methodologies required for addressing such problems. Machine learning is also defined as an algorithm that improves performance of a certain task through continuous experience.

An artificial neural network (ANN) is a model used in machine learning, and may refer to an overall model having problem solving ability, which is composed of artificial neurons (nodes) that form a network by a combination of synapses. The artificial neural network (ANN) may be defined by a connection pattern between neurons of different layers, a learning process of updating model parameters, and an activation function of generating an output value.

The artificial neural network (ANN) may include an input layer and an output layer, and may optionally include one or more hidden layers. Each layer includes one or more neurons, and the artificial neural network (ANN) may include a synapse that interconnects neurons and other neurons.

In the artificial neural network (ANN), each neuron may output a function value of an activation function with respect to input signals received through synapses, weights, and deflection.

A model parameter may refer to a parameter determined through learning, and may include the weight for synapse connection and the deflection of neurons. In addition, the hyperparameter refers to a parameter that should be set before learning in a machine learning algorithm, and includes a learning rate, the number of repetitions, a mini-batch size, an initialization function, and the like.

The purpose of training the artificial neural network (ANN) may be seen as determining model parameters that minimize a loss function according to the purpose of the robot or the field of use of the robot. The loss function may be used as an index for determining an optimal model parameter in a learning process of the artificial neural network (ANN).

Machine learning may be classified into supervised learning, unsupervised learning, and reinforcement learning according to learning methods.

Supervised learning refers to a method for training the artificial neural network (ANN) in a state where a label for learned data is given. Here, the label may refer to a correct answer (or a resultant value) that should be inferred by the artificial neural network (ANN) when the learned data is input to the artificial neural network (ANN). Unsupervised learning may refer to a method for training the artificial neural network (ANN) in a state where a label for learned data is not given. Reinforcement learning may refer to a learning method in which an agent defined in the certain environment learns to select an action or sequence of actions that may maximize cumulative compensation in each state.

Among artificial neural networks, machine learning implemented as a deep neural network (DNN) including a plurality of hidden layers is also referred to as deep learning, and deep learning is a part of machine learning. Hereinafter, machine learning is used in a sense including deep learning.

Artificial intelligence (AI) technology is applied to the robot, so that the robot may be implemented as a guide robot, a transportation robot, a cleaning robot, a wearable robot, an entertainment robot, a pet robot, and an unmanned aerial robot, etc.

The robot may include a robot control module for controlling operation thereof, and the robot control module may refer to a software module or a chip implemented in hardware.

By means of sensor information obtained from various types of sensors, the robot may acquire state information of the robot, may detect (recognize) the surrounding environment and the object, may generate map data, may determine a travel route and a travel plan, may determine a response to user interaction, or may determine a necessary operation.

The robot may perform the above-described operations using a learning model composed of at least one artificial neural network (ANN). For example, the robot may recognize the surrounding environment and object using a learning model, and may determine a necessary operation using the recognized surrounding environment information or object information. Here, the learning model may be directly learned from the robot or learned from an external device such as an AI server.

In this case, whereas the robot may perform a necessary operation by directly generating a result using the learning model, the robot may also perform an operation by transmitting sensor information to an external device such as an AI server and receiving the resultant information generated thereby.

The robot may perform autonomous driving through artificial intelligence. Autonomous driving refers to a technique in which a movable object such as a robot may autonomously determine an optimal path by itself and may move while avoiding collision with an obstacle. The autonomous driving technique currently being applied may include a technique in which the movable object (e.g., a robot) may travel while maintaining a current driving lane, a technique in which the movable object may travel while automatically adjusting a driving speed such as adaptive cruise control, a technique in which the movable object may automatically travel along a predetermined route, and a driving technique in which, after a destination is decided, a route to the destination is automatically set.

In order to perform autonomous driving, the movable object such as the robot may include a large number of sensors to recognize data of the surrounding situation. For example, the sensors may include a proximity sensor, an illumination sensor, an acceleration sensor, a magnetic sensor, a gyro sensor, an inertial sensor, an RGB sensor, an infrared (IR) sensor, a fingerprint recognition sensor, an ultrasonic sensor, an optical sensor, a microphone, a lidar, a radar, and the like.

The robot may perform autonomous driving not only based on information collected by sensors, but also based on image information collected by an RGBC camera and an infrared (IR) camera and sound information collected through a microphone. In addition, the robot may travel based on information received through a user input unit. Map data, location information, and information about peripheral situations may be collected through a wireless communication unit. The collected information is requisite for autonomous driving.

Map data may include object identification information for various objects disposed in a space where the robot moves. For example, the map data may include object identification information for fixed objects such as a wall and a door, and other object identification information for movable objects such as a flowerpot and a desk. In addition, the object identification information may include a name, a type, a distance, a location, etc.

Therefore, the robot may essentially include sensors, various input units, a wireless communication unit, and the like to collect data that may be learned by artificial intelligence, and may perform optimal operations by synthesizing various types of information. The learning processor for performing artificial intelligence may perform learning by being mounted in a controller embedded in the robot, may transmit the collected information to a server, may perform learning through the server, and may retransmit the learned result to the robot, so that the robot may perform autonomous driving based on the learned result.

A robot equipped with artificial intelligence may collect the surrounding information even in a new place to implement the entire map, and a large amount of information about a place of the major activity zone may be accumulated, so that the robot may perform more accurate autonomous driving.

The robot may include a touchscreen or a button to receive a user input, and may receive a command by recognizing a user's voice. In order to convert a voice input signal into a character string, the processor may obtain information about the intention corresponding to the user input using at least one of a speech to text (STT) engine for converting a voice input into a character string and a natural language processing (NLP) engine for obtaining information about the intention of natural language.

In this case, at least one of the STT engine and the NLP engine may include an artificial neural network (ANN) trained by a machine learning algorithm. In addition, at least one of the STT engine and the NLP engine may be trained by the learning processor, may be trained by the learning processor of the AI server, or may be trained by distributed processing of the trained results.

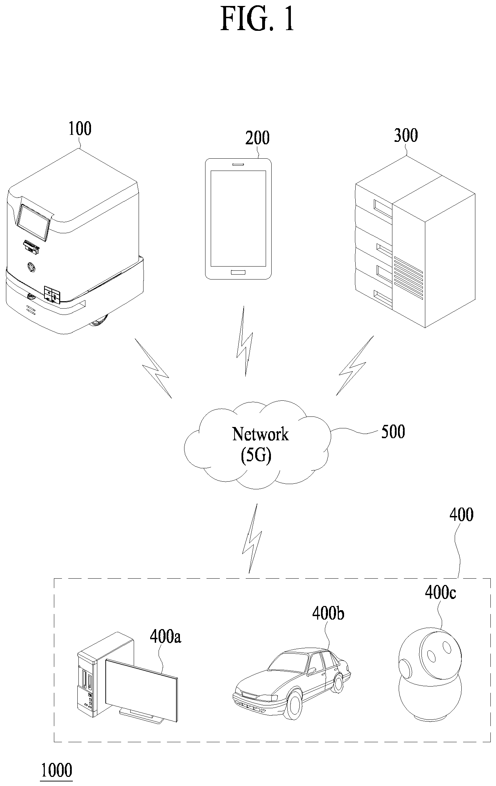

FIG. 1 is a diagram illustrating a cloud system 1000 based on a 5G network according to an embodiment of the present disclosure.

Referring to FIG. 1, the cloud system 1000 may include a transport robot 100, a mobile terminal 300, a robot control system 200, various devices 400, and a 5G network 500.

The transport robot 100 is a robot that transports goods (articles) from a departure point to a destination. The transport robot 100 can move directly from a logistics center to a destination. Alternatively, after the transport robot is loaded on a vehicle at the logistics center and is then delivered to the vicinity of the destination by the vehicle, the transport robot is unloaded from the vehicle and then moves to the destination.

In addition, the transport robot 100 may move articles to the destination not only outdoors but also indoors. The transport robot 100 can be implemented as an AGV, and the AGV may be a transport device that moves by a sensor, a magnetic field, a vision device, etc. on the floor.

The transport robot 100 may include a storage area for storing articles therein, the storage area may be divided into a plurality of partial storage areas to load various articles, and various types of articles may be placed in the partial storage areas. Accordingly, mixing of articles can be prevented.

The mobile terminal 300 may communicate with the transport robot 100 via the 5G network 500. The mobile terminal 300 may be a device carried by a user who installs a partition in the storage area to load articles, or may be a device carried by a recipient of the loaded articles. The mobile terminal 300 may provide information based on images, and the mobile terminal 300 may include mobile devices such as a mobile phone, a smartphone, a wearable device (e.g., a watch-type terminal, a glass-type terminal, an HMD).

The robot control system 200 may remotely control the transport robot 100 and respond to various requests of the transport robot 100. For example, the robot control system 200 may perform calculations using artificial intelligence (AI) based on the request from the transport robot 100.

In addition, the robot control system 200 may determine a movement path of the transport robot 100. When there is a plurality of destinations, the robot control system 200 may determine the order of the destinations when there are multiple destinations.

The various devices 400 may include a personal computer (PC) 400a, an autonomous vehicle 400b, a home robot 400c, etc. When the transport robot 100 arrives at the transport destination of the articles, the transport robot 100 can directly deliver the articles to the home robot 400c through communication with the home robot 400c.

The various devices 400 may be connected to the transport robot 100, the mobile terminal 300, the robot control system 200, etc., via the 5G network 500 by wire or wirelessly.

The transport robot 100, the mobile terminal 300, the robot control system 200, and various devices 400 are all equipped with 5G modules to transmit and receive data at a rate of 100 Mbps to 20 Gbps (or higher), so that large video files can be transmitted to various devices, and power consumption can be minimized by operating at low power. However, the transfer rate may be implemented differently depending on the embodiments.

The 5G network 500 may include a 5G mobile communication network, a short-range network, the Internet, etc., and may provide a communication environment for devices by wire or wirelessly.

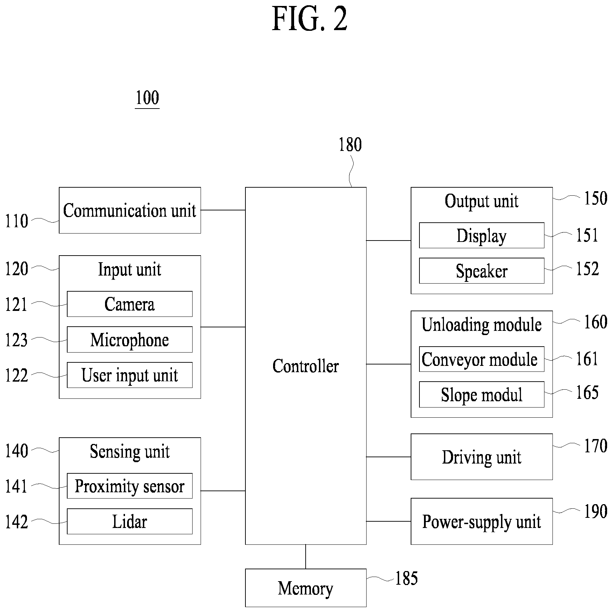

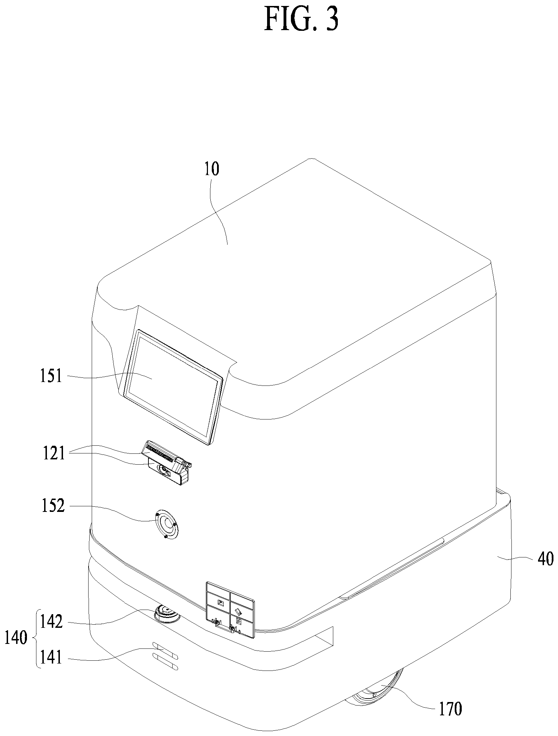

FIG. 2 is a block diagram illustrating appearance of the transport robot 100 according to an embodiment of the present disclosure. The transport robot 100 according to an embodiment of the present disclosure will be described with reference to FIGS. 3 to 5.

Referring to FIG. 2, the transport robot 100 may include a body including a storage area 50, and constituent components to be described later may be included in the body. The transport robot 100 may include a communication unit 110, an input unit 120, a sensor unit 140, an output unit 150, a memory 185, a wheel driving unit 170, a controller 180, and a power-supply unit 190. The constituent components shown in FIG. 2 are not always required to implement the transport robot 100, such that it should be noted that the transport robot 100 according to the present disclosure may include more or fewer components than the elements listed above.

The communication unit 110 may include a wired or wireless communication module capable of communicating with the robot control system 200.

As an optional embodiment, the communication unit 110 may be equipped with modules for GSM, CDMA, LTE, 5G, WLAN, Wi-Fi, Bluetooth, RFID, infrared communication (IrDA), ZigBee, and NFC communication.

The input unit 120 may include a user input unit 122 for receiving information from a user. As an optional embodiment, the input unit 120 may include a camera 121 for inputting an image signal, and a microphone 123 (hereinafter referred to as a "microphone") for receiving an audio signal. Here, the camera 121 or the microphone 123 may be treated as a sensor, and a signal acquired from the camera 121 or the microphone 123 may be referred to as sensing data or sensor information.

The input unit 120 may acquire input data to be used when acquiring output data using learning data and a learning model for model learning. The input unit 120 may obtain unprocessed input data. In this case, the controller 180 may extract input feature points as preprocessing for the input data.

The camera 121 may be located in front to detect obstacles in front, and as shown in FIG. 3, a plurality of cameras 121 may be arranged to be different in angle. In more detail, the plurality of cameras 121 may have different capture directions, such as a camera for widely recognizing a front-view area and a camera for capturing a floor.

Alternatively, cameras with different functions may be provided. For example, a wide-angle camera, an infrared (IR) camera, etc. may be provided. The camera may serve as a sensor unit 140 for detecting surrounding objects.

The user input unit 122 may be provided with a touch panel overlapping with a button or a display 151. Alternatively, a user command may be input remotely through the communication unit 110. In this case, the user input unit 122 may include a PC 400 or a remote control device separately provided from the transport robot 100.

Since the user input unit 122 includes all methods capable of receiving user commands, the user input unit 122 can recognize user commands through voice recognition. That is, a voice recognition device that analyzes voice collected from the microphone 123 and extracts user commands can also serve as the user input unit 122.

The input unit 120 may include an article information input unit, and the article information input unit may receive information about the article's size, information about the article's weight, destination information, information about a transport requester, etc. At this time, the article information input unit may include a code reader.

The sensor unit 140 may obtain at least one of internal information of the transport robot 100, surrounding environment information of the transport robot 100, and user information using various sensors.

At this time, the sensor unit 140 may include various types of sensors for recognizing the surroundings for autonomous driving. Representative examples may include a distance detection sensor or a proximity sensor 141 and a Lidar 141.

The proximity sensor 141 may include an ultrasonic sensor that recognizes nearby objects and determines the distance to the objects based on the time taken for emitted ultrasonic waves to return. A plurality of proximity sensors may be provided along the circumference, and may also be provided on an upper side to detect obstacles located on the upper side.

The Lidar 142 is a device that precisely expresses exterior appearances of the surroundings by emitting laser pulses and receiving the light that is reflected from the surrounding objects. The operation principle of the Lidar 142 is similar to that of a radar, but different electromagnetic waves are used in the Lidar 142 and the radar, so that the Lidar 142 and the radar are designed to use different technologies and different utilization ranges.

Lasers may damage human eyesight because they use light with a wavelength of 600 to 1000 nm. The Lidar 142 uses a longer wavelength than the lasers, and is used to measure not only the distance to a target object, but also a moving speed and direction, temperature, surrounding atmospheric material analysis, a concentration measurement, and the like.

In addition, the sensor unit 140 may include an illumination sensor, an acceleration sensor, a magnetic sensor, a gyro sensor, an inertial sensor, an RGB sensor, an infrared (IR) sensor, a fingerprint recognition sensor, an ultrasonic sensor, a light sensor, an optical sensor, etc.

The output unit 150 may generate various output signals related to visual, auditory and/or tactile sensations. The output unit 150 may include an optical output unit that outputs visual information, a display 151, etc. The output unit 150 may include a speaker 152 for outputting auditory information, an ultrasonic output unit for outputting ultrasonic signals belonging to an inaudible frequency, etc., and a haptic module for outputting tactile information.

The memory 185 may store data that supports various functions of the transport robot 100. The memory 185 may store not only a plurality of application programs (or applications) driven by the transport robot 100, but also data and commands required to operate the transport robot 100.

In addition, the memory 185 may store information required to perform operations using artificial intelligence, machine learning, and artificial neural networks. The memory 185 may store a deep neural network model. The deep neural network model may be used to infer a result value for new input data rather than learning data, and the inferred value may be used as a basis of determination required to perform a certain operation.

The power-supply unit 190 may receive external power or internal power under control of the controller 180, such that the power-supply unit 190 may supply the received power to the constituent components included in the transport robot 100. The power-supply unit 190 may include, for example, a battery. The battery 191 may be implemented as an embedded battery or a replaceable battery. The battery may be charged by a wired or wireless charging method, and the wireless charging method may include a magnetic induction method or a magnetic resonance method.

The driving unit 170 is a means for moving the transport robot 100, may include wheels or legs, and may include a wheel driving unit and a leg driving unit for controlling the wheels or legs. A plurality of wheels provided on the bottom surface of the wheel driving unit may be controlled to move the transport robot 100 including the body. The wheels may include a main wheel 171 for fast driving, a caster 173 for changing the direction to another direction, and an auxiliary caster for stable driving so that the loaded articles (L) do not fall during driving.

The leg driving unit (not shown) may control multiple legs according to control of the controller 180, and may thus move the body. The plurality of legs may correspond to a configuration formed so that the transport robot 100 can walk or run. The plurality of legs may be implemented as four legs, but the scope of the present disclosure is not limited thereto. The plurality of legs may be coupled to the body to be integrally formed, and may be implemented to be detachably coupled to the body.

The transport robot 100 may move the body through the driving unit 170 having at least one of the wheel driving unit and/or the leg driving unit. However, in this specification, an example in which the wheel driving unit is mounted on the transport robot 100 will be mainly described.

The controller 180 is a module that controls the configurations of the transport robot 100. The controller 180 may refer to a data processing device embedded in hardware that has a physically structured circuit to perform a function expressed by code or commands included in a program. As an example of the data processing device embedded in hardware, this exemplary data processing device may include processing devices such as a microprocessor, a central processing unit (CPU), a processor core, a multiprocessor, an ASIC, and an FPGA, but the scope of the present disclosure is not limited thereto.

The transport robot 100 may include a loading area 50 in the main body, and the loading area 50 may include a sidewall or cover 10 for preventing the articles from falling off from the loading area 50. Referring to FIG. 3, the transport port 10 is illustrated as having the cover 10, but another form in which only a sidewall other than the top surface of the transport port 10 is provided is also possible.

Although there is no separate layer distinction in the loading area 50 as shown in the drawing, the loading area 50 is composed of a plurality of layers, and multiple objects can be loaded while being distributed into respective layers. After unloading the lower articles (L), the upper articles can be moved to the lower layer to unload additional objects.

The controller 180 may collect at least one of the number of articles (L) to be placed in the loading area 50, weight information of the articles (L), size information of the articles (L), delivery order information of the articles (L), and security level information of the articles (L). For example, the controller 180 may collect the above information through the input unit 120. The input of the input unit 120 may also include a touch input on the display.

Based on the collected information, the controller 180 may transmit information on the articles (L) loaded in the loading area 50 to the mobile terminal 200 (see FIG. 1) through the communication unit 110.

The transport robot 100 may include an unloading module 160 for unloading the articles (L) loaded in the loading area 50. The unloading module 160 may include a conveyor 161 constituting the lower part of the loading area 50. The conveyor 161 may include a conveyor belt 1611 that moves in a first direction where an unloading exit is located, a roller 1612 for driving the conveyor belt 1611, and a motor (not shown).

According to the present embodiment, the conveyor 161 may be configured to cover the entire floor surface of the loading area 50, but if the size of the transport robot 100 is large, the conveyor 161 may be formed in a part of the loading area 50. In this case, a plurality of articles (L) may be loaded, and a pusher (not shown) may be further included to push the articles (L) loaded in an area other than the conveyor 161 to the conveyor 161.

The conveyor 161 may further include a slope module 165 that is spaced apart from the floor surface (i.e., the bottom surface) so that the article (L) can be stably moved from the conveyor 161 to the floor surface. The slope module 165 may form a slope extending from the conveyor 161 to the floor surface while being introduced and withdrawn from the body.

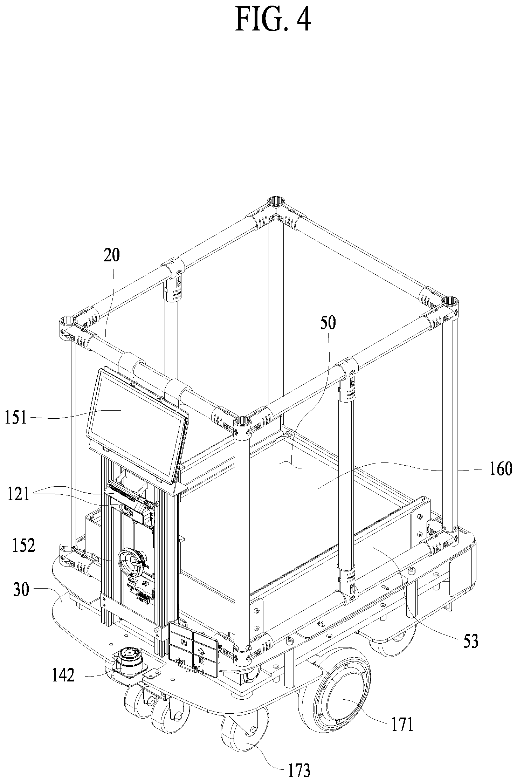

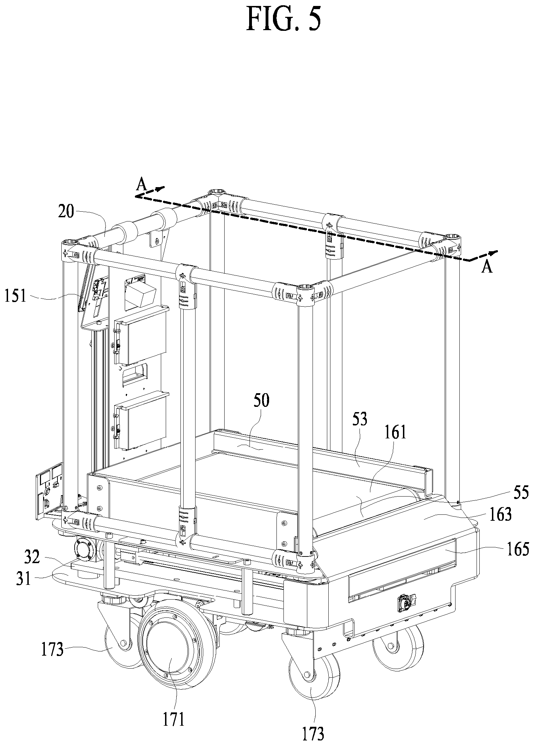

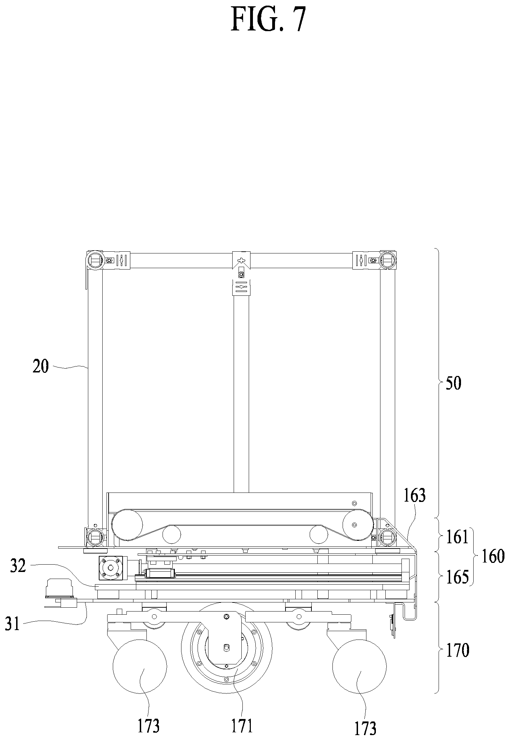

The unloading module 160 including the slope module 165 will hereinafter be described with reference to the drawings. FIG. 3 is a perspective view illustrating the transport robot 100 according to an embodiment of the present disclosure. FIGS. 4 to 6 are perspective views illustrating a state in which the cover of the transport robot 100 of FIG. 3 is removed. FIG. 7 is a cross-sectional view illustrating the transport robot 100 taken along the line A-A of FIG. 5.

Referring to FIG. 3, the main body in which the loading space and the driving unit 170, the battery 191, the board assembly 181, etc. are mounted may have a box shape, and the shape of the main body is not necessarily limited thereto, but may have a hexahedral shape in order to load a box-shaped article (L).

The main body may be provided with a housing 40 forming the exterior and a cover 10 covering the loading area 50, and the cover may protect the internal components and the loading space from the outside.

The main driving direction is referred to as the front surface. A camera 121, a rider 142, a proximity sensor 141, etc. may be placed on the front surface of the main body. A display unit 151 provided with a touch panel that functions as an output unit and a user input unit may be located on the front surface of the transport robot 100.

As an opening for unloading the articles (L), the unloading exit 55 may be located on the rear surface of the main body. Although the unloading exit 55 may be located on the front surface, components required for driving are disposed on the front surface of the transport robot 100, so that it is easy to secure a space that can form the unloading exit 55 with a sufficient size in the backward direction.

As shown in FIG. 4, when the cover is removed, the components are fixed and the frame (20, 31, 32) that constitutes the loading space may be included in the transport robot 100. The frame may include a base frame 31 that constitutes the bottom surface and an upper frame 20 that constitutes the loading space.

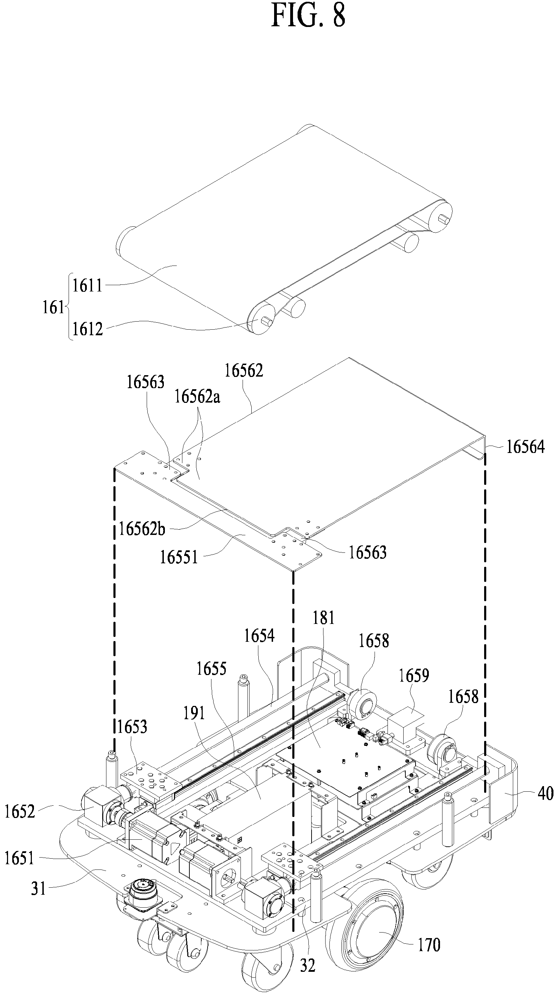

FIG. 8 is an exploded perspective view illustrating the lower structure of the transport robot 100 according to one embodiment of the present disclosure. The base frame 31 is a plate-shaped member in which the driving unit 170 is coupled to a lower part of the transport robot 100. The battery 191 serving as the power-supply unit and the substrate assembly 181 serving as the power-supply unit may be seated on the lower part of the transport robot 100. Further, the slope module 165 and the conveyor 161 constituting the unloading module 160 may be seated in the base frame 31.

The conveyor 161 may serve to move the articles loaded in the loading space toward the unloading exit 55, and may form the floor surface of the loading space. Instead of the conveyor 161, a pusher that pushes the loaded articles (L) may be used to push the loaded articles (L) toward the unloading exit 55 to unload the articles (L) from the transport robot 100.

The transport robot 100 may include a sidewall portion that forms the boundary of the loading space along the circumference of the conveyor 161 except for the direction of the unloading exit 55. Since the articles (L) cannot be unloaded when the conveyor 161 is in operation if the articles (L) fall off from the conveyor 161, the sidewall portion may guide the articles (L) so that they do not fall off from the conveyor 161 due to shaking when the transport robot 100 moves.

When the conveyor 161 is placed adjacent to the floor surface, the articles (L) can be unloaded stably on the floor surface without a separate slope module 165. However, in order to drive the transport robot 100 stably, the center of gravity must be located toward the bottom regardless of whether or not the articles (L) are loaded.

The battery 191 and the substrate assembly 181, which occupy most of the weight of the transport robot 100, must be located at the lower part of the transport robot 100 so as to lower the center of gravity, and the driving unit 170 also requires a space of a certain height at the bottom of the loading space in order to place multiple casters as well as the main wheel.

A slope module 165 is required to connect the conveyor 161 that constitutes the lower part of the loading space to the floor surface. In the case where a pusher is included instead of the conveyor 161, a slope module 165 is required to connect the floor surface of the loading space to the floor surface for unloading the articles (L).

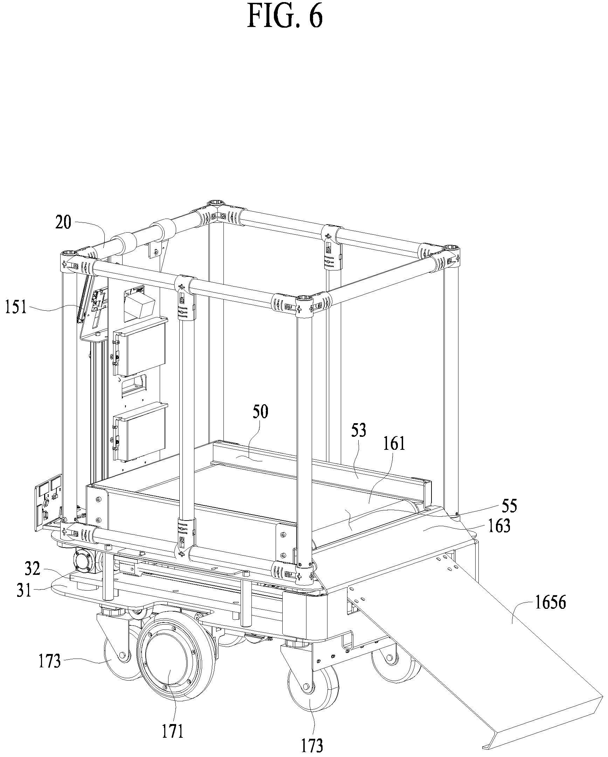

When the transport robot 100 moves in a state where the slope (inclined surface) is exposed outside, it may collide with an obstacle and be damaged, causing inconvenience in driving. Therefore, the moving plate 1656 that constitutes the slope can be configured to be pulled out from the body only when the articles (L) are unloaded, as shown in FIG. 6.

As shown in FIG. 7, the slope module can be located at the lower part of the conveyor 161. A slope module may include a moving plate 1656 that constitutes the slope and a slide driving unit that provides driving force so that the moving plate can be pulled in and out.

As illustrated in FIG. 8, a slide driving unit of the slope module may be positioned by utilizing the circumference of the space where the battery 191 and the substrate assembly 181 are mounted, and the moving plate 1656 may cover the battery 191 and the substrate assembly 181 and may be located at the lower part of the conveyor 161.

For convenience of description, the direction of movement of the conveyor 161 and the moving plate 656 to unload the articles (L) will hereinafter be referred to as a first direction, and the direction opposite to the first direction in which the moving plate 1656 moves to store the moving plate 1656 will hereinafter be referred to as a second direction. In the present embodiment, the direction from the front to the back, where the display unit or the camera is placed, is referred to as the first direction, and the direction from the back to the front is referred to as the second direction.

The moving plate 1656 may be stored inside the body as shown in FIG. 5 while driving, and the opening through which the moving plate 1656 is pulled out may include a bent portion 16564 at the first end located in the first direction so that the moving plate 1656 can cover the opening when stored so that the inside of the moving plate 1656 is not exposed.

The bent portion 16564 may be configured by bending the end of the moving plate (1656) downward, and as shown in FIG. 6, when the moving plate 1656 is pulled out from the main body, the bent portion 16564 comes into contact with the floor surface. The bent portion 16564 may be configured by bending the second plate 16562 two times, resulting in formation of a first bent portion 16564a and a second bent portion 16564b.

Referring to FIG. 8, the slope module 165 may include a moving plate 1656, and a slide driving unit that provides driving force to the moving plate 1656 so that the slide driving unit is seated on the base frame 31 together with the battery 191 and the substrate assembly 181.

The slide driving unit may include a motor 1651 that provides rotational force, a ball screw 1654 that rotates by receiving rotational force of the motor 1651 and extends, and a moving block 1653 that moves in the first direction or the second direction along the ball screw 1654.

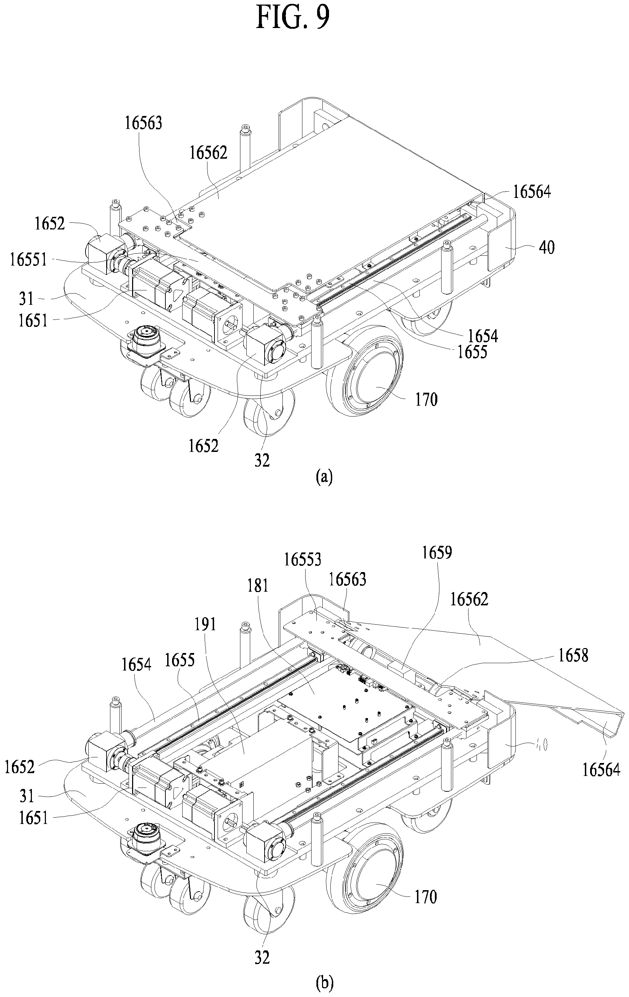

FIG. 9 is a diagram illustrating the operation of the moving plate 1656 of the transport robot 100 according to one embodiment of the present disclosure.

The moving block 1653 may be connected to the moving plate 1656, and moves in the first direction so that the moving plate 1656 is pulled out from the body of the transport robot 100 and moves in the second direction. As a result, the moving plate 1656 can be placed in the transport robot 100.

As shown in FIG. 8, the ball screw 1654 and the moving block 1653 may be provided in pairs on both sides in a third direction perpendicular to the first direction, and may be provided in pairs in the direction perpendicular to the moving direction of the moving plate 1656, so that the moving plate 1656 can move stably in the first direction or the second direction without shaking.

The ball screw 1654 has screw threads formed on the outer circumferential surface thereof, and the moving block 1653 includes a first through-hole via which the ball screw 1654 passes, and includes screw threads that engage with the screw threads of the ball screw 1654.

The ball screw 1654 may be directly connected to the motor 1651, but in order to reduce the mounting space, a rotary shaft of the motor 1651 may be arranged to face the third direction as shown in FIG. 8, and a bevel gear 1652 may be used to change the direction of the rotational force of the motor 1651. The bevel gear 1652 is a gear in which two conical gears (one pair of conical gears) are engaged with each other and rotated to change the rotational direction, and any gear shape other than the bevel gear 1652 may be used as long as the bevel gear 1652 t changes the rotational direction.

The motor 1651 may be provided in pairs to be connected to each ball screw 1654, or the driving force of one motor 1651 may be distributed and transmitted to a pair of ball screws 1654.

The moving block 1653 may further include a linear guide 1655 that penetrates the moving block 1653 while being parallel to the ball screw 1654 so that the moving block 1653 does not rotate together with the ball screw 1654. The linear guide 1655 is a bar-shaped member without screw threads, and does not restrict movement of the moving block 1653 in the first or second direction, but restricts movement or rotation in other directions.

The moving block 1653 is coupled to the second direction end of the moving plate 1656 so that the moving plate 1656 is completely pulled out, and at this time, since sagging may occur at the first direction end of the moving plate 1656, a bearing that supports the lower part of the moving plate 1656 and rotates when the moving plate 1656 moves may be further provided.

The bearing may be spaced apart from the moving block 1653 in the first direction and may be disposed between two ball screws 1654 in the third direction so as not to overlap with the moving block 1653.

FIG. 9(a) illustrates a state in which the moving plate 1656 is stored, and FIG. 9(b) illustrates a state in which the moving plate 1656 is pulled out. When the moving plate 1656 is stored, the moving plate 1656 is disposed in the horizontal direction, and when the moving plate 1656 is pulled out, the moving plate 1656 can be implemented as two moving plates to form the inclined surface.

The moving plate 1656 may include a first plate 16561 that is connected to the moving block 1653; a second plate 16562 that is pulled out from the body to form the inclined surface; and a damping hinge 16563 that connects the first plate 16561 and the second plate 16562 so that the angle between the first plate 16561 and the second plate 16562 can be changed.

The first plate 16561 maintains a horizontal state while being combined with the moving block 1653 and slides without changing the angle. Meanwhile, the second plate 16562 forms the same plane as the first plate 16561 as shown in FIG. 9(a) when stored and maintains a horizontal state, but when the second plate 16562 is pulled out (withdrawn), the angle of the damping hinge 16563 is changed and tilted as shown in FIG. 9(b).

While the second plate 16562 is pulled out, the second plate 16562 may be maintained in the same plane as the first plate 16561, or may be slightly tilted downward within a range having a vertical size or less of the opening.

When a space is created for the second end of the second plate 16562 located in the second direction with respect to the damping hinge 16563 adjacent to the opening to rotate, the first end of the second plate 16562 located in the first direction is inclined downward to contact the floor surface.

The second end of the second plate 16562 may be a straight line, but the length of the first inclined surface 16562 formed by the second plate 16562 may be slightly longer by extending the portion where the damping hinge 16563 is not connected to the portion where the damping hinge 16563 is connected slightly further in the second direction. The damping hinge 16563 may be connected to the fastening parts 16562a of the third-direction ends of the second plate 16562, respectively, and a protrusion 16562b may be formed therebetween.

The first plate 16561 may also be formed in a U-shape in which the protrusion 16562b is concave and the third-direction ends protrude in correspondence to the shape of the second end of the second plate 16562.

The first end of the second plate 16562 may be disposed in the opening as shown in FIG. 5 when the second plate 16562 is stored, and may support the second plate 16562 by contacting the floor surface as shown in FIG. 6 when the second plate 16562 is pulled out (withdrawn).

As shown in FIG. 5, the first end of the second plate 16562 in the first direction may be bent to form a first bent portion 16564a so as to cover the opening. The first inclined surface 16562 formed by the second plate 16562 is terminated at a predetermined distance from the floor surface as shown in FIG. 6 by the first bent portion 16564a.

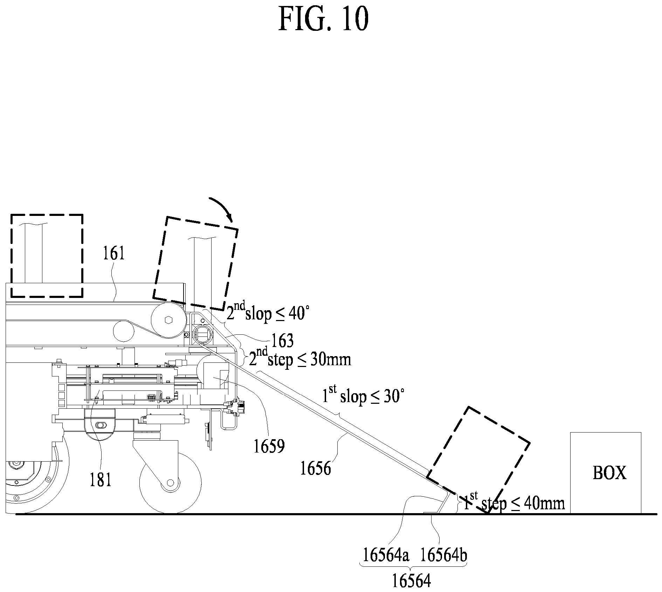

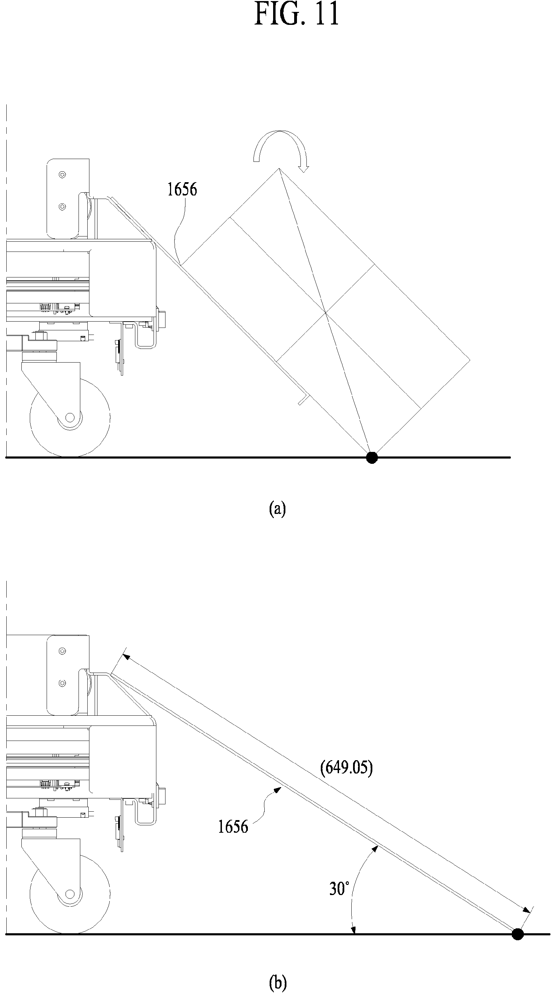

FIG. 10 is a diagram illustrating a process of unloading the article (L) through the unloading module 160 of the transport robot 100 according to one embodiment of the present disclosure, and FIG. 11 is a diagram illustrating a design process for deriving the angle and length of the moving plate 1656.

As shown in FIG. 10, the moving plate 1656 may be moved to the maximum in the first direction so that the second plate 16562 is disposed to be tilted at a predetermined angle.

The first inclined surface 16562 formed by the second plate 16562 may more stably unload the article (L) as the angle becomes smaller. However, if the angle is too small, the article (L) does not slide along the first inclined surface 16562. If the angle of the first inclined surface 16562 is too steep, as shown in FIG. 11(a), the article may tip over as the rotational force is converted when the article touches the floor.

The article (L) is generally assumed to be a rectangular box, and since the box is placed so that a wide surface of the box can touch the floor, the diagonal angle of the article (L) is 45° or less. Even based on the size of the standardized box, the diagonal angle of the box is approximately 30° to 35°.

As shown in FIG. 11(a), the force coming down the first inclined surface 16562 generates torque around the edge that first touches the floor surface, so that the inclined surface should have an angle of about 40° or less, and preferably, an angle of about 30° is appropriate. The overturning angle may vary depending on the size of the article (L), the frictional force between the article (L) and the first inclined surface 16562, or the weight of the article (L).

Even if the conveyor 161 is configured to have the angle of 30° as in FIG. 11(b), in order to configure the inclined surface extending from the conveyor 161, the length of the first inclined surface 16562 needs to be 650 mm if the conveyor 161 has a height of 265 mm from the floor surface. When the overall length of the robot 100 is considered to be 650 mm, the moving plate 1656 cannot be stored.

In order to configure the length of the first inclined surface 16562 to be short while maintaining the angle of the first inclined surface 16562 at about 30°, a stepped portion may be formed at the first end, and a second inclined surface 163 located between the first inclined surface 16562 and the conveyor 161 may be additionally provided.

As described above, the first bent portion 16564a located at the first end of the second plate 16562 covers the opening and at the same time comes into contact with the floor surface in a state where the moving plate 1656 is pulled out. In order to form a continuous surface along with the cover that covers the opening and forms the exterior, the first bent portion 16564a may be bent at an angle of 90° from the second plate 16562.

The end of the first bent portion 16564a may be further bent to form the second bent portion 16564b so that the end of the first bent portion 16564a contacts the floor surface and increases friction with the floor surface so as to stably support the first inclined surface 16562. The angle between the first bent portion 16564a and the second bent portion 16564b may be bent to have an angle of +90° with respect to the angle between the second plate 16562 and the floor surface.

Since the length of the second plate 16562 increases when the second bent portion 16564b is bent outward, the first bent portion 16564a and the second bent portion 16564b can be configured so that the first end of the second plate 16562 forms a U-shape, as illustrated in FIG. 10.

As illustrated in FIG. 10, the end of the first slope may form a first stepped portion (i.e., a first step) spaced apart from the floor surface by a predetermined distance. If the first bent portion 16564a is not present, the length of the second plate 16562 corresponding to twice the length of the bent portion 16564 must be extended to implement the first slope 16562 that extends to the floor surface. Therefore, the length of the second plate 16562 can be reduced by forming the first bent portion 16564a.

However, if the size of the first bent portion 16564a is too large, the first stepped portion becomes larger in size, causing the article (L) to fall on the floor surface, and thus impact is applied to the article (L), so that it is preferable that the size of the first stepped portion be configured to be within 40 mm.

As shown in FIG. 11(b), when the first inclined surface 16562 starts from the first directional end of the conveyor 161, the length of the conveyor 161 becomes too long, so that the opening may be located slightly lower than the conveyor 161, and a second inclined surface 163 may be additionally provided between the conveyor 161 and the first inclined surface 16562.

The second inclined surface 163 may be configured using a part of the housing 40 of the transport robot 100 instead of being in a form that is pulled in and out. A fixed inclined portion 163 may be configured to have a predetermined angle from the conveyor 161, and an opening through which the moving plate 1656 can be pulled in and out may be formed at the end of the fixed inclined portion.

Although the angle of the second inclined surface 163 is slightly steeper than the angle of the first inclined surface 16562, the moving speed of the article may be reduced while moving along the first inclined surface 16562. When the second inclined surface 163 is configured to have a steeper angle than that of the first inclined surface 16562, the length of the entire inclined surface may be reduced, so that the fixed inclined portion 163 having the slope of 40° or less may be included.

Although the opening is formed directly at the bottom of the second inclined surface 163 formed by the fixed inclined surface 163, a second stepped portion may be formed between the first inclined surface 16562 and the second inclined surface 163. The second stepped portion may shorten the length of the first stepped portion and the overall slope length, and may have a stepped portion of about 30 mm or less so that no impact occurs when moving from the second inclined surface 163 toward the first inclined surface 16562.

The reason why the size of the second stepped portion is smaller than that of the first stepped portion is that the first stepped portion is connected to the floor surface and the second stepped portion is connected to the first inclined surface 16562, so that a greater impact may occur than the impact at the first stepped portion. As a result, the fixed inclined portion 163 and the opening may be formed in the main body housing to have a second stepped portion having a smaller size than the first step.

The article (L) transported along the conveyor 161 rotates when it reaches the second inclined surface 163 and moves along the second inclined surface 163 due to occurrence of rotational force, passes through the second stepped portion and the first inclined surface 16562, and moves from the first stepped portion to the floor surface, thereby completing the unloading process.

As described above, the transport robot 100 according to the present disclosure can automatically unload the loaded article (L), so that transport of the article can be completed even in an environment where there are no people after the transport.

In addition, the loaded articles (L) can be safely unloaded to prevent the articles (L) from being overturned or damaged by falling.

In addition, the length of the moving plate 1656 is short, so it is easy to load the articles into the transport robot 100 and the time taken to load or unload the articles can be shortened.

The above detailed description is not to be construed as limiting in any respect and should be considered exemplary. The scope of the disclosure is to be determined by a reasonable interpretation of the appended claims, and all changes within the equivalents of the disclosure are included in the scope of the disclosure.

## Claims

1. A transport robot comprising:
a body configured to include a loading area and an unloading exit located at one side of the loading area;
a driving unit located at a lower part of the body and providing a driving function;
a conveyor located at a lower part of the loading area and transporting articles loaded in the loading area to the unloading exit;
a moving plate that is pulled out from the body in a first direction at a lower part of the unloading exit and forms a first inclined surface extending from the unloading exit to the floor; and
a slide driving unit configured to provide power for moving the moving plate.

2. The transport robot according to claim 1, wherein the slide driving unit includes:
a motor configured to provide rotational force;
at least one ball screw configured to rotate by receiving the rotational force of the motor and extend in the first direction; and
a moving block that moves in the first direction or a second direction opposite to the first direction when the ball screw rotates, and at the same time is coupled to the moving plate.

3. The transport robot according to claim 2, wherein:
the ball screw includes two ball screws provided in pairs so that the two ball screws are spaced apart in a third direction perpendicular to the first direction.

4. The transport robot according to claim 2, wherein:
the motor includes a rotary shaft that faces a third direction perpendicular to the first direction,
wherein the transport robot further includes:
a bevel gear disposed between the motor and the ball screw and changing a rotation direction of the motor.

5. The transport robot according to claim 2, further comprising:
a linear guide configured to penetrate the moving block and arranged parallel to the ball screw.

6. The transport robot according to claim 2, wherein the slide driving unit includes:
a bearing that is spaced apart from the motor in the first direction, supports a lower part of the moving plate, and rotates according to movement of the moving plate.

7. The transport robot according to claim 1, wherein the moving plate includes:
a first plate coupled to the slide driving unit;
a second plate configured to protrude outward from the body and forming an inclined surface; and
a damping hinge configured to interconnect the first plate and the second plate,
wherein
when the second plate is completely withdrawn to the outside of the body, the first plate and the second plate are bent at a predetermined angle.

8. The transport robot according to claim 7, wherein an end portion arranged in a second direction opposite to the first direction of the second plate includes:
a pair of fastening parts located on both sides of a third direction perpendicular to the first direction and fastened to the damping hinge; and
a protrusion configured to extend in the second direction between the pair of fastening parts.

9. The transport robot according to claim 1, further comprising:
a bent portion configured to be bent downward from a first-directional end of the moving plate.

10. The transport robot according to claim 9, wherein the bent portion includes:
a first bent portion that is bent 90 degrees at the end of the moving plate; and
a second bent portion that is bent from the first bent portion and contacts the floor surface when the moving plate is withdrawn.

11. The transport robot according to claim 9, further comprising:
a stopper that is located at the first directional end of the body, and contacts the bent portion when the moving plate is seated in the body, thereby restricting a movement distance of the moving plate.

12. The transport robot according to claim 1, further comprising:
a fixed inclined portion configured to form a second inclined surface where the conveyor and the moving plate are connected to each other.

13. The transport robot according to claim 12, wherein:
the second inclined surface has a greater angle than that of a first inclined surface formed when the moving plate is withdrawn from the body.

14. The transport robot according to claim 12, further comprising:
an opening through which the moving plate is withdrawn, formed at a lower part of the fixed inclined portion,
wherein
the opening is formed to have a size of a bent portion that is bent downward from the first directional end of the moving plate.

15. The transport robot according to claim 1, wherein:
an angle of the first inclined surface is 40° or less.
